# EUROPÄISCHE PATENTSCHRIFT

(11) **EP 0 680 897 B1**
(45) Veröffentlichungstag und Bekanntmachung des Hinweises auf die Patenterteilung: **01.07.1998**
(21) Anmeldenummer: 95106042.5
(22) Anmeldetag: 22.04.1995
(51) Int. Cl.: B65D 90/62, B65D 88/66

(54) **Entleereinrichtung für Schüttgut-Container**
Emptying device for bulk material containers
Dispositif de vidage pour conteneurs pour matériaux en vrac

(30) Priorität: 06.05.1994 DE 4416009
(43) Veröffentlichungstag der Anmeldung: 08.11.1995
(73) Patentinhaber: Umformtechnik Hausach GmbH, D-77756 Hausach (DE)
(72) Erfinder: Kiefer, Fritz, D-77709 Wolfach (DE); Müller, Thomas, D-77756 Hausach (DE); Braumann, Ralf, D-77756 Hausach (DE); Fuchs, Werner, D-77716 Haslach (DE)
(74) Vertreter: Patentanwälte Westphal, Buchner, Mussgnug Neunert, Göhring

(56) Entgegenhaltungen:
- EP-A- 0 049 992
- EP-A- 0 547 861
- DE-A- 2 923 444
- DE-A- 3 842 549
- DE-B- 1 152 877
- DE-C- 3 718 428
- DE-U- 1 928 969
- US-A- 3 123 107

## Beschreibung

Die Erfindung betrifft eine Entleereinrichtung für Schüttgut-Container gemäß dem Oberbegriff des Anspruchs 1.

Derartige Entleereinrichtungen werden benötigt, um Schüttgut aus Kleincontainern mit trichterförmigem Auslauf am Bestimmungsort in einen Lagerbehälter oder dgl. zu entleeren. Hierzu wird der das Schüttgut enthaltende Container auf eine in der Regel ortsfeste Entleerstation aufgesetzt, die mit der Auslaufgeometrie des Containers abgestimmt und in der Lage ist, einen Öffnungs- und Verschließvorgang am Container zu bewirken, so daß das Schüttgut aus dem Container auch chargenweise auslaufen und dem unterhalb der Entleerstation zugeordneten Auffang-, Prozeß- oder Vorratsbehälter zugeführt werden kann.

Hierzu ist bei einer vorbekannten, von der Anmelderin entwickelten Entleereinrichtung am unteren Ende des Schüttgut-Containers ein Auslauftrichter angeformt, der mit einem kegelförmig in das Innere des Containers hineinweisenden Verschlußorgan versehen ist. Das Verschlußorgan ist axial verschieblich in einer zylindrischen Führung gelagert, die sich über Streben am Auslauftrichter abstützt. An den Streben sind Schraubenfedern angebracht, die an ihrem gegenüberliegenden Ende innen am Verschlußorgan angreifen und dieses unter Vorspannung gegen die Innenwand des Auslauftrichters fixiert halten. Das Verschlußorgan ist am unteren Ende mit einer umlaufenden Dichtung versehen, so daß in Schließstellung ein dichter Abschluß zwischen dem Verschlußorgan und dem Auslauftrichter erreicht wird. Die Dichtwirkung wird unterstützt durch das Gewicht des Schüttguts, welches von oben auf das kegelförmige Verschlußorgan wirkt und dieses somit zusätzlich gegen die Innenwand des Auslauftrichters gedrückt hält.

Zum Öffnen des Verschlußorgans ist es erforderlich, den Container auf die Entleerstation aufzusetzen, so daß vier, der Entleerstation zugeordnete Pneumatikzylinder ausgefahren werden und auf das Verschlußorgan einwirken können. Die Pneumatikzylinder heben das Verschlußorgan an, so daß das Schüttgut zwischen dem Verschlußorgan und dem Auslauftrichter hindurchtreten kann.

Obwohl sich derartige Entleereinrichtungen prinzipiell bewährt haben, weisen sie doch eine Reihe von Nachteilen auf.

Zum einen ist eine relativ aufwendige Steuerung der vier Pneumatikzylinder erforderlich, um ein exaktes Abheben des Verschlußorgans in Form einer Axialverschiebung zu realisieren. Weiterhin hat es sich gezeigt, daß das Schüttgut, insbesondere Schüttgut feiner Körnung, zu einer Beeinträchtigung der Funktionssicherheit führen kann, da es in sämtliche Spalte, Hinterschneidungen etc. eindringt und daraus kaum mehr enftfernt werden kann.

Ein weiteres Problem tritt im Zusammenhang mit der Verwendung im Lebensmittel- oder Pharmabereich auf, da es dort erforderlich ist, die Entleerstation und den Container rückstandsfrei zu säubern. Dies gelingt bei den bekannten Entleereinrichtungn nur sehr schwer, da die Führungen, Federn und weitere Bauteile im Inneren des Verschlußorgans schlecht oder überhaupt nicht zugänglich sind. Darüber hinaus verbleiben häufig Reinigungsmittelrückstände an diesen schlecht zugänglichen Bauteilen und verunreinigen bei der Austragung einer Schüttgutcharge diese in unerwünschter oder unzulässiger Weise.

Weiterhin ist aus der EP-B-0 049 992 ein Betätigungsorgan bekanntgeworden, das zentral auf ein kegelförmiges Verschlußorgan einwirkt und gesteuert betätigbar ist. Es handelt sich hierbei um eine stufenförmig aktivierbare Balgvorrichtung, die über eine relativ aufwendige Mimik mit dem Verschlußorgan verbunden ist. Sie weist jedoch eine Vielzahl von Hinterschneidungen, Ritzen, Spalten und toten Winkeln auf, die weite Teile des Fließquerschnittes durchsetzen und somit in noch weit stärkerem Maß Ablagerungsmöglichkeiten für Schmutzpartikel und Reinigungsmittelrückstände bilden, wie dies bei der bekannten Entleereinrichtung der Anmelderin der Fall ist.

Zur Vermeidung dieser Problematik ist zwar auch schon aus der DE-C-37 18 428 oder aus der US-A-3,123,107 von der Erfindung ausgeht, bekannt, einen zentralen Dorn an Stützstreben anzubringen, der beim Aufsetzen des Containers auf die Entleerstation das Verschlußorgan selbsttätig anhebt. Der Dorn ist allerdings hinsichtlich seiner Position fixiert, so daß der Öffnungsvorgang allein durch das Aufsetzen des Containers auf die Entleerstation bewirkt wird und nicht gezielt steuerbar auszulösen ist. Somit wird das Verschlußorgan während des Absetzvorgangs vorzeitig geöffnet , d.h. bevor der Container vollständig auf der Entleerstation aufgesetzt ist. Für eine Reihe von Anwendungen ist deshalb diese Entleervorrichtung nicht geeignet, insbesondere nicht für die eingangs angesprochenen Anwendungsgebiete der Lebensmittel- und Pharmaindustrie, da dort aus hygienischen und septischen Gründen der Container mit seinem Auslauftrichter dicht auf den Einlaufbereich der Entleerstation aufgesetzt sein muß, bevor das Verschlußorgan betätigt wird.

Der Erfindung lag deshalb das Problem zugrunde, eine Entleereinrichtung der eingangs genannten Art derart weiterzuentwickeln, daß sie die geschilderten Nachteile nicht mehr aufweist. Insbesondere soll ein unbeabsichtigtes Eindringen von Schüttgutpartikeln in Spalte, Ritzen oder Hinterschneidungen zuverlässig verhindert und ein praktisch rückstandsfreies Säubern ermöglicht werden.

Gelöst wird dieses Problem mit einer Entleereinrichtung, welche die Merkmale des Anspruchs 1 aufweist.

Vorteilhafte Ausgestaltungsformen der Erfindung sind durch die Merkmale der Unteransprüche angegeben.

Die Erfindung basiert auf der Idee, das Verschlußorgan durch einen einzigen zentral angeordneten Pneumatikzylinder zu beaufschlagen, der über radial verlaufende Stützstreben im Einlaufbereich der Entleerstation gehalten ist. Gleichzeitig sind im Inneren der Stützstreben die Versorgungskanäle integriert. Damit ist auch der untere Teil der Entleervorrichtung, nämlich die Entleerstation, praktisch vollkommen glatt und ohne Hinterschneidungen oder Vorsprünge ausgeführt. Der Einlaufbereich der Entleerstation wird nicht mehr von relativ großvolumigen, im Randbereich angeordneten Pneumatikzylindern verengt, Ablagerungen von Schüttgut oder Reinigungsmitteln sind damit zuverlässig zu vermeiden.

Gemäß weiterer bevorzugter Ausführungsformen der Erfindung werden ausgeklügelte Luftführungskanäle innerhalb der pneumatischen Hubeinrichtung , d.h. des Pneumatikzylinders, realisiert, so daß dort stets optimale Druckverhältnisse einstellbar sind, um einerseits eine optimale Verschiebebewegung des Pneumatikzylinders zu ermöglichen und andererseits ein Eindringen von Schüttgutpartikeln in das Innere der Hubeinrichtung während des Betriebs zu verhindern. Hierbei werden wiederum die die Hubeinrichtung tragenden Stützstreben verwendet, um die Zu- und Abfuhr von Luft ohne zusätzliche Leitungen oder dgl. zu ermöglichen.

Die Erfindung wird nachstehend anhand der in den Figuren schematisch dargestellten Ausführungsbeispiele näher erläutert. Es zeigen:
- Figur 1: grundsätzlicher Aufbau der Entleereinrichtung,
- Figur 2: Axialschnitt der Entleereinrichtung in Schließstellung,
- Figur 3: weiterer Axialschnitt (senkrecht zur Schnittebene gemäß Figur 2) der Entleereinrichtung in Schließstellung,
- Figur 4: Entleereinrichtung gemäß Figur 3, jedoch in Auslaufstellung,
- Figur 5: Ausführungsvariante der Entleereinrichtung in Auslaufstellung und
- Figur 6: weitere Ausführungsvariante der Entleereinrichtung mit integriertem Wegaufnehmer in Schließstellung.

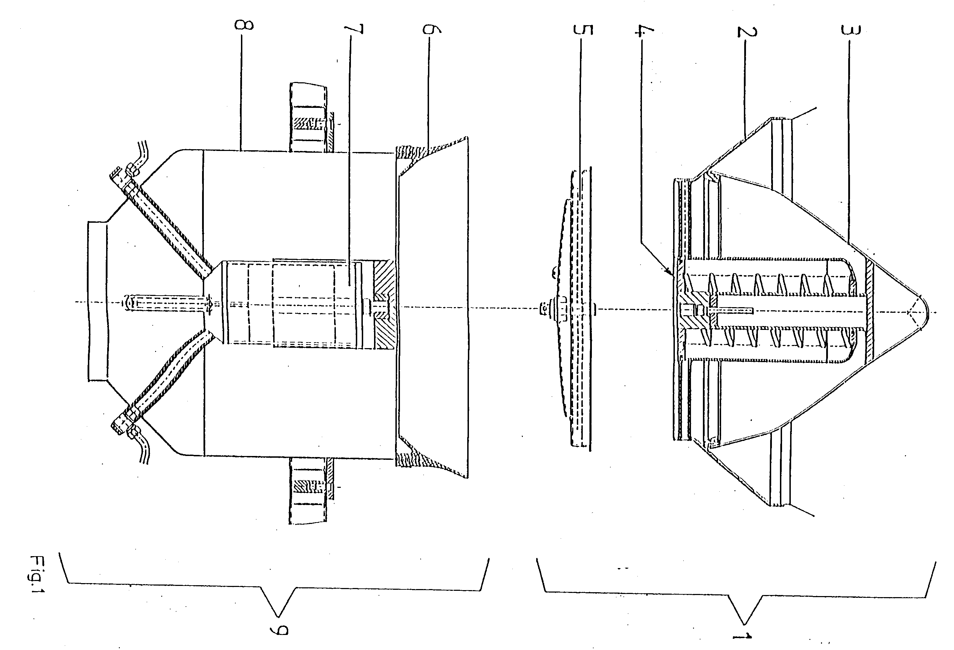

In Figur 1 ist der grundsätzliche Aufbau der Entleereinrichtung dargestellt. Sie besteht im wesentlichen aus einem Auslaufbereich eines Schüttgut-Containers 1, der in an sich bekannter Weise ausgeführt und in der Darstellung gemäß Figur 1 lediglich angedeutet ist. Dort sind ein kegelförmiges Verschlußorgan 3 mit daran befestigter zylindrischer Führung 4 für einen Auslauftrichter 2 dargestellt. Als zusätzliche Transportsicherung ist ein Deckel 5 optional vorhanden, der als Blinddeckel von unten gegen den Auslauftrichter 2 gesetzt und fixiert werden kann.

Die Entleereinrichtung besitzt als weitere Baugruppe die Entleerstation 9, die in der Regel ortsfest ausgeführt und beispielsweise mit einem Gestell für Überflur- oder Unterflurbefestigung versehen ist und die Verbindung zu einem hier nicht dargestellten Lagerbehälter oder dgl. besitzt. Die Entleerstation 9 weist einen Einlaufbereich 8 auf, der nach oben hin eine Dichtmanschette 6 trägt. Diese ist dazu bestimmt, den Auslauftrichter 2 des Schüttgut-Containers 1 beim Aufsetzen auf die Entleerstation 9 dicht zu umfassen.

Am unteren Ende des Einlaufbereichs 8 ist eine pneumatische Hubeinrichtung 7 abgestützt, die auf die Führung 4 des Schüttgut-Containers 1 ausgerichtet und dazu bestimmt ist, bei aufgesetztem Schüttgut-Container 1 das Verschlußorgan 3 anzuheben, so daß das hier nicht näher dargestellte Schüttgut in die Entleerstation 9 gelangen kann.

Die erfindungsgemäße Entleereinrichtung besteht somit aus den beiden Baugruppen 1, 9, die exakt aufeinander abgestimmt sein müssen, um die gewünschte Entleerfunktion realisieren zu können. Bei den nachfolgend im Detail beschriebenen Ausführungsbeispielen wird von der Konzeption einer ortsfesten Entleerstation 9 Gebrauch gemacht, auf die die beweglichen Schüttgut-Container 1 als Transportcontainer aufgesetzt werden können. In analoger Weise ist es jedoch möglich, die Baugruppen 1, 9 zu einer nicht lösbaren Entleerstation zu verbinden, um beispielsweise einen Großbehälter in Form eines Silos oder dgl. mit einer erfindungsgemäßen Entleereinrichtung auszustatten. Auch im letztgenannten Fall des Silos wird ein optimales Auslaufen des darin gespeicherten Schüttguts angestrebt, so daß insoweit Übereinstimmung mit der Problemstellung bei mobilen Schüttgut-Transportbehältern gegeben ist.

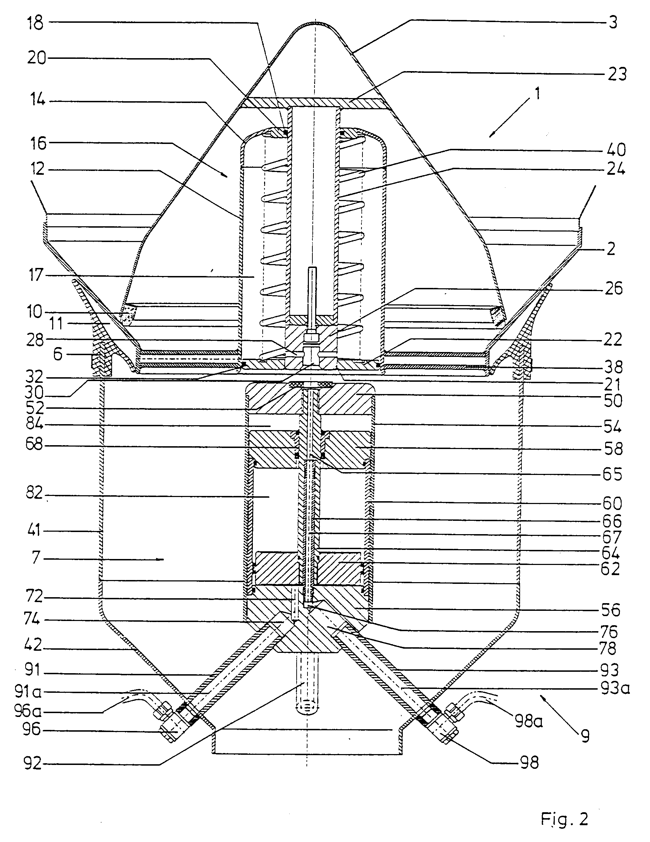

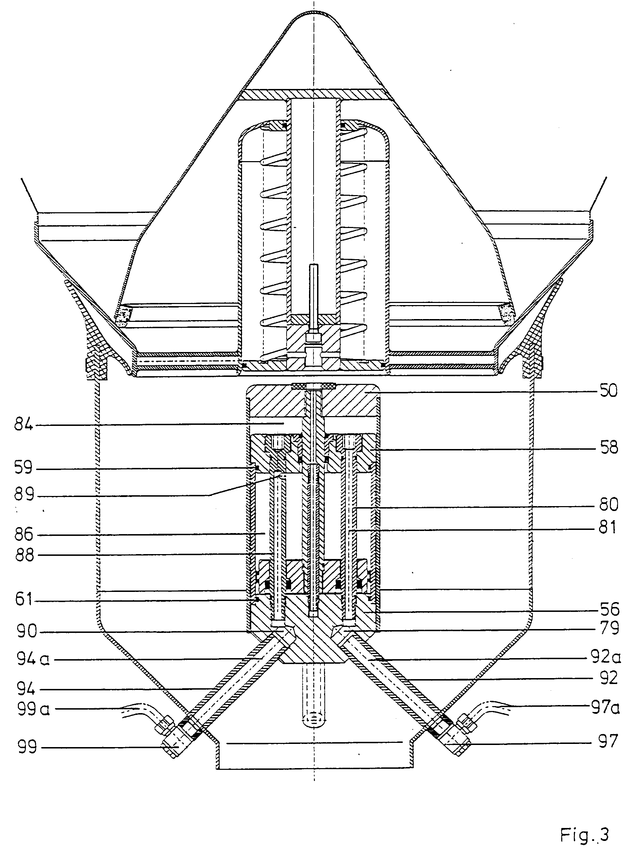

Bei den Darstellungen gemäß Figur 2 bis 4 handelt es sich um die bevorzugte Ausführungsform eines Schüttgut-Transportbehälters 1, der auf eine ortsfeste Entleerstation 9 aufsetzbar ist. In den Figuren 2 und 3 ist der Schüttgut-Container 1 auf die Entleerstation 9 aufgesetzt und befindet sich in Schließstellung. In diesem Zustand ist das kegelförmige Verschlußorgan 3 gegen die Innenwand des Auslauftrichters 2 gehalten und ein umlaufender Dichtungsring 10, der am unteren Ende des Verschlußorgans 3 angebracht ist, liegt unter elastischer Deformation dichtend auf. Der Auslauftrichter 2 ragt mit axialer Überdeckung in ein Aufsatzrohr 41 der Entleerstation 9 hinein, wobei der Übergang durch eine Dichtmanschette 6 abgedichtet ist. Die Dichtmanschette 6 sitzt auf dem Aufsatzrohr 41 auf und ist von außen gegen den Auslauftrichter 2 gedrückt. Der Auslauftrichter 2 ist in diesem Bereich im Querschnitt in etwa L-förmig gestaltet, so daß die beiden sich gegenüberliegenden Enden der Dichtmanschette 6 unter Bildung eines Hohlraums 11 an dem Auslauftrichter 2 anliegen. Dies führt zu einer besonders guten Dichtwirkung, da einerseits in zwei unterschiedlichen Axialpositionen ein umlaufendes Anliegen der Dichtmanschette 6 am Auslauftrichter 2 gegeben ist und andererseits durch elastische Deformation der Dichtmanschette 6 im Hohlraum 11 ein Unterdruck erzeugt werden kann, der ein unbeabsichtigtes Abheben der Dichtmanschette 6 von dem Auslauftrichter 2 bei leichter und nicht zu verhindernder Relativbewegung zwischen dem Schüttgut-Container 1 und der Entleerstation 9 während des Einfüllvorgangs verhindert.

Die Vorspannkraft, mit der das Verschlußorgan 3 gegen die Innenwand des Auslauftrichters 2 gezogen wird, wird durch eine Rückstellfeder 40 erzeugt. Die Rückstellfeder 40 befindet sich vollständig gekapselt im Inneren eines Führungszylinders 16, der im wesentlichen aus einer zylindrischen Führung 12 und einem Abschluß 14 besteht. Die zylindrische Führung 12 ist über radial verlaufende Streben 38 innen und am auslaufenden Ende des Auslauftrichters 2 gehalten. Die Streben 38 sind rohrförmig gestaltet, so daß sie einerseits den Entleervorgang möglichst wenig behindern und andererseits für Schüttgutpartikel keine Anlagerungsmöglichkeit bieten. Die runde Querschnittsform erleichtert auch das Abfließen von Reinigungsmittelrückständen, so daß die gewählte Querschnittsform zusätzliche Vorteile einer einfachen und effektiven Reinigung eröffnet.

Der Führungszylinder 16 dient weiterhin der Führung des Verschlußorgans 3. Hierzu ist eine Druckscheibe 22 vorgesehen, die nach Art eines Kolbens im Führungszylinder 16 verschieblich gelagert ist. Die Druckscheibe 22 ist mit einer Druckstange 24 verbunden, die nach Art einer Kolbenstange den Führungszylinder 16 axial durchsetzt und nach oben hin durchdringt. Stirnseitig ist die Druckstange 24 mit einem Tragring 23 verbunden, der seinerseits das Verschlußorgan 3 aufnimmt. Eine Axialverschiebung der Druckscheibe 22 bewirkt eine entsprechende Verschiebung des Verschlußorgans 3. Die Rückstellfeder 40 ist somit als Druckfeder ausgeführt und stützt sich zwischen der Druckscheibe 22 und dem Abschluß 14 des Führungszylinders 16 ab.

Der Innenraum 17 des Führungszylinders 16 ist gegenüber der Umgebung abgedichtet, so daß keine Schüttgutpartikel oder Reinigungsflüssigkeitsrückstände eindringen können. Zur Abdichtung trägt die Druckscheibe 22 an ihrem Außenumfang eine umlaufende Ringdichtung 32, die an der Innenwandung der Zylinderführung 12 entlanggeführt ist. Weiterhin ist eine Ringdichtung 18 im Bereich der Durchführung der Druckstange 24 durch den Führungszylinder 16 vorgesehen. Sie ist von einer Scheibe 20 gehalten, die am Abschluß 14 befestigt ist. Die Scheibe 20 dient gleichzeitig zur radialen Führung des auslaufenden Schraubengangs der Rückstellfeder 40.

Aufgrund der abgedichteten Gestaltung des Innenraums 17 ist es erforderlich, diesen be- und entlüftbar zu gestalten, um die gewünschte Verschiebebewegung der Druckscheibe 22 zu ermöglichen, ohne daß Über- bzw. Unterdruck im Innenraum 17 entsteht. Stärkerer Überdruck im Innenraum 17 ist unerwünscht, da dieser die Verschiebung der Druckscheibe 22 unnötig behindern würde. Überdruck in geringem Ausmaß kann jedoch bewußt zugelassen werden und erwünscht sein, um ein unbeabsichtigtes Eindringen von Schüttgutpartikeln zu verhindern.

Der Aufbau von Unterdruck im Innenraum 17 muß unter allen Umständen verhindert werden, da sonst die Gefahr besteht, daß trotz der abgedichteten Ausführung Schüttgutpartikel in den Innenraum 17 gelangen können.

Es ist deshalb die Druckstange 24 mit einem Axialabschnitt 26 versehen, der eine zentrale Axialbohrung 30 trägt, die von der Stirnseite 21 ausgeht und in die mehrere, im wesentlichen radial verlaufende Bohrungen 28 münden, welche die Verbindung zum Innenraum 17 des Führungszylinders 16 herstellen. Die Radialbohrungen 28 bzw. der diese tragende Axialabschnitt 26 ist der Druckscheibe 22 zugewandt, so daß das Be- und Entlüften des Innenraums 17 auch bei maximaler Hubstellung der Druckscheibe 22 möglich ist.

Je nach Bewegungsrichtung der Druckscheibe 22 kann sich deshalb eine Druckausgleichsströmung innerhalb der Bohrungen 28, 30 einstellen. Weiterhin kann die Druckausgleichsströmung aktiv unterstützt werden, sofern durch entsprechende, nachstehend näher beschriebene Maßnahmen zusätzlich über die Bohrungen 28, 30 Luft zu- bzw. abgeführt wird. Damit ist es prinzipiell auch möglich, stets einen geringen Überdruck im Innenraum 17 aufrechtzuerhalten, um, wie vorstehend beschrieben, das Eindringen von Schüttgutpartikeln absolut zuverlässig zu verhindern.

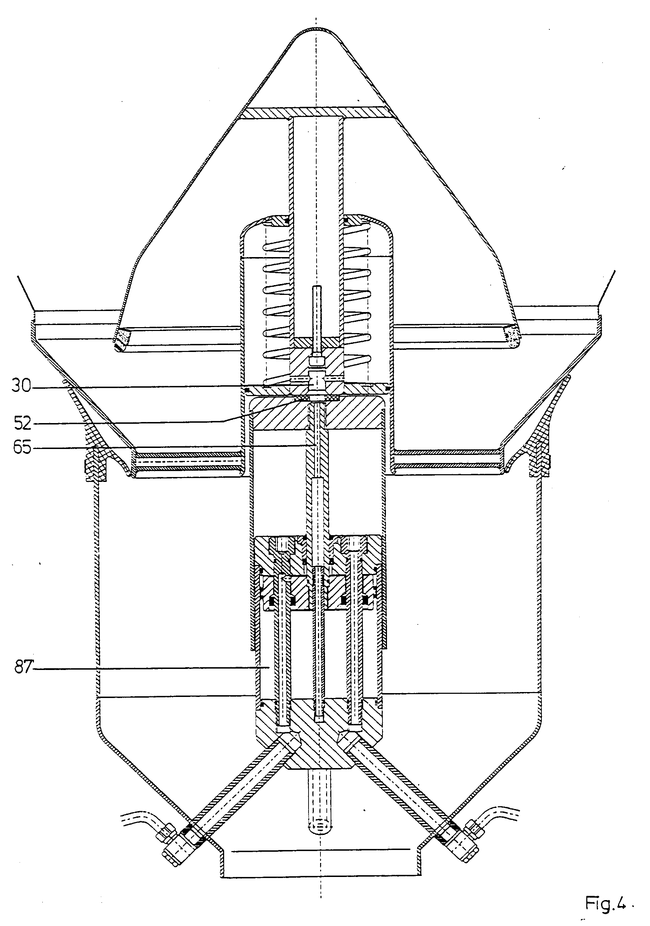

Das Verschlußorgan 3 wird von einer pneumatischen Hubeinheit 7 betätigt, die der Entleerstation 9 zugeordnet ist. Die pneumatische Hubeinheit 7 ist exakt auf die Druckscheibe 22 ausgerichtet und dazu bestimmt, diese aus der in Figur 2 gezeigten Schließstellung in die in Figur 4 dargestellte Auslaufstellung zu verschieben. Gleichzeitig sind in der pneumatischen Hubeinrichtung weitere Funktionsdetails realisiert, so daß der Auslaufvorgang des Schüttguts optimiert ist.

Die pneumatische Hubeinrichtung 7 weist einen einzigen, zentral angeordneten Pneumatikzylinder 50 - 90 auf, der über radial verlaufende Stützstreben 91, 92, 93, 94 im Einlaufbereich 42 der Entleerstation 9 gehalten ist. Somit steht dem Schüttgut ein praktisch ungestörter ringförmiger Querschnitt im Bereich des Aufsatzrohres 41 und des Einlaufbereichs 42 zur Verfügung, der ein rasches Entleeren des Schüttguts aus dem Schüttgut- Container 1 ermöglicht. Weiterhin sind kaum Spalten, Hinterschneidungen oder Vertiefungen vorhanden, an denen sich Schüttgutpartikel anlagern könnten.

Die pneumatische Hubeinrichtung 7 ist wiederum vollständig gekapselt, so daß sich eine optimale Funktionssicherheit in Verbindung mit guter Reinigungsmöglichkeit ergibt. Die vier Stützstreben 91, 92, 93, 94 sind symmetrisch, radial einwärts weisend ausgerichtet und tragen einen Verteilerblock 56. Auf den Verteilerblock 56 ist eine Zylinderwand 60 aufgesetzt, die ihrerseits einen Zylinderdeckel 58 trägt.

Somit entsteht innerhalb ein Zylinderraum 82, in welchem ein Kolben 62 axial verschieblich gelagert ist. Er unterteilt damit den Zylinderraum 82 in einen oberen Verdrängerraum 86 und einen unteren Verdrängerraum 87, deren Volumina in Abhängigkeit der Stellung des Kolbens 62 veränderlich sind.

Der Zylinderraum 82 ist an den Übergangsstellen von dem Verteilerblock 56 zur Zylinderwand 60 einerseits und von der Zylinderwand 60 zum Zylinderdeckel 58 andererseits durch Dichtringe 59, 61 hochdruckabgedichtet.

Der Kolben 62 ist zum Betätigen des Verschlußorgans 3 mit Druckluft beaufschlagbar, die über einen im Verteilerblock 56 integrierten Zuführkanal 72 zugeführt werden kann. Hierzu ist im Verteilerblock 56 eine Übergangsbohrung 74 angebracht, in die die Strebe 91 eingesetzt ist und von der der Zuführkanal 72 abgeht. Die Strebe 91 ist nach Art eines Rohres hohl ausgeführt, so daß in ihrem Inneren ein Versorgungskanal 91a entsteht. An dem dem Einlaufbereich 42 zugewandten Ende ist außen ein Anschlußelement 96 für eine Versorgungsleitung 96a angebracht. Über die Versorgungsleitung 96a kann somit Druckluft hochdruckabgedichtet über die Stützstrebe 91 und den Verteilerblock 56 dem unteren Verdrängerraum 87 zugeführt werden, um eine aufwärtsgerichtete Axialverschiebung des Kolbens 62 zu bewirken, andererseits kann hierüber der untere Verdrängerraum 87 während der abwärtsgerichteten Rückkehrbewegung entlüftet werden.

Der Kolben 62 trägt eine Kolbenstange 64, die den Zylinderdeckel 58 durchdringt und stirnseitig eine Druckplatte 50 trägt, welche auf die Druckscheibe 22 des Verschlußorgans 3 ausgerichtet ist. Die Kolbenstange 64 ist im Bereich des Zylinderdeckels in einer Gleitbuchse 68 geführt, die zusätzlich die Abdichtung zum Zylinderraum 82 hin gewährleistet.

Die Druckplatte 50 trägt eine nach unten weisende Hülse 54, die mit geringem radialem Spiel an der Zylinderwand 60 entlanggeführt ist. Somit ist sichergestellt, daß beim Ausfahren der Druckplatte 50 der sich zwischen dem Zylinderdeckel 58 und der Druckplatte 50 ergebende Zwischenraum 84 abgedeckt ist. Die Hülse 54 bewirkt somit eine Art Kapselung der gesamten pneumatischen Hubeinrichtung 7 und ist so weit nach unten geführt, daß bei maximal ausgefahrener Druckplatte 50 der Zwischenraum 84 weitgehend abgeschlossen ist, wobei lediglich ein relativ enger radialer Ringspalt zwischen der Hülse 54 und der Zylinderwand 60 verbleibt, der ein Eindringen von Schüttgutpartikeln weitgehend ausschließt.

Der Außendurchmesser der Hülse 54 - und damit auch der Druckplatte 50 - ist etwas kleiner gewählt als der Innendurchmesser des Führungszylinders 16, so daß ein problemloses Eintauchen beim Ausfahren der Pneumatikeinheit 7 möglich ist. Wie sich z.B. aus Figur 4 ergibt, verbleibt zwischen der Innenwand des Führungszylinders 16 und der Hülse 54 ein gewisses radiales Spiel, um eine einwandfreie Betätigung auch für den Fall zu ermöglichen, daß der Schüttgut-Container 1 nicht vollständig exakt zentriert auf der Entleerstation 9 aufgesetzt ist.

Die weiteren Maßnahmen sind auf die gezielte Be- und Entlüftung von Räumen, wie z.B. dem Innenraum 17 des Führungszylinders 16 oder dem Zwischenraum 84 der Hubeinrichtung 7, gerichtet, die aufgrund der gekapselten Ausführung erforderlich oder zumindest wünschenswert ist.

In Figur 2 ist die Luftführung zum Be- und Entlüften des Innenraums 17 des Führungszylinders 16 dargestellt. Hierzu trägt der Verteilerblock 56 ein zentrales Kolbenstangenrohr 66, auf dem aixal verschieblich und abgedichtet die Kolbenstange 64 geführt ist. Die Kolbenstange 64 ist mit einer Durchgangsbohrung 65 versehen, die einerseits Verbindung hat zu einer Durchgangsbohrung 67 des Kolbenstangenrohrs 66 und weiterhin an der Stirnseite der Druckplatte 50 im Bereich einer Ringdichtung 52 mündet. Es entsteht somit eine abgedichtete, durchgehende Verbindung vom Innenraum 17 des Führungszylinders 16 über die Durchgangsbohrung 65 der Kolbenstange 64, die Durchgangsbohrung 67 des Kolbenstangenrohrs 66, eine Zentralbohrung 76 und eine Übergangsbohrung 78, welche im Verteilerblock 56 angebracht sind, zu der Stützstrebe 93 bzw. des darin integrierten Versorgungskanals 93a, und damit zu dem außen liegenden Anschlußelement 98 bzw. der daran angeschlossenen Versorgungsleitung 98a. Bedingung hierfür ist, daß die Druckplatte 50 mit der daran angebrachten Dichtung 52 fest gegen die Druckscheibe 22 gedrückt ist und den Mündungsbereich der Axialbohrung 30 dicht umschließt. Eine derartige Konstellation ist in Figur 4 angedeutet.

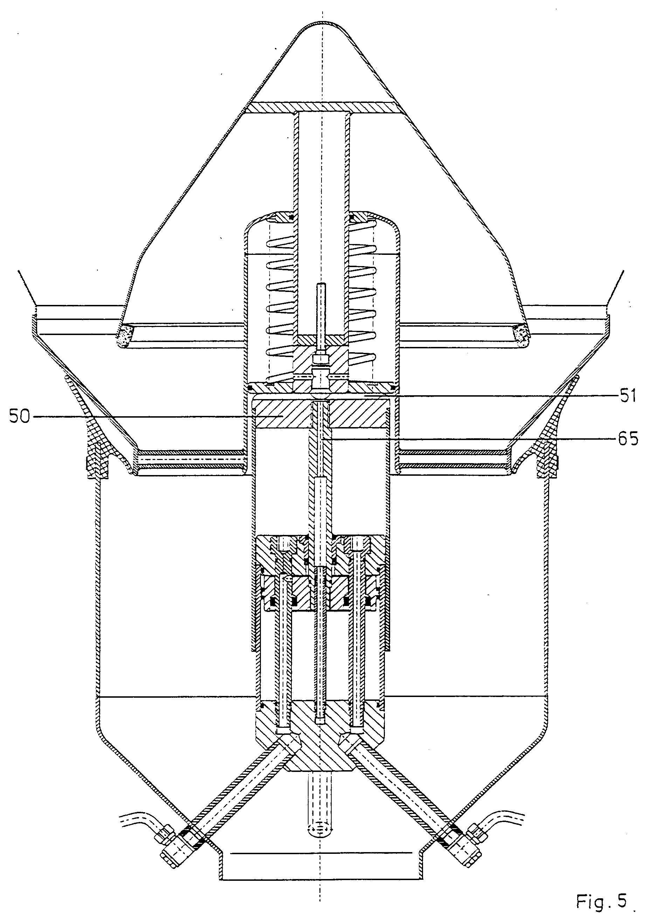

In Figur 5 ist eine geringfügig modifizierte Konfiguration dargestellt. In diesem Fall weist die Druckplatte 50 eine durchgehende, radial verlaufende Nut 51 auf, die den Bereich der Durchgangsbohrung 65 der Kolbenstange 64 erfaßt. Weiterhin trägt die Druckplatte 50 im Mündungsbereich der Durchgangsbohrung 65 keine Dichtung. Somit entsteht durch die Nut 51 ein Entlüftungskanal, sofern die Druckplatte 50 zur Anlage an die Druckscheibe 22 gebracht ist. Dieser Kanal mündet in den Ringspalt zwischen der Innenwand des Führungszylinders 16 und der Hülse 54, so daß eine nach außen gerichtete Luftströmung erzeugt werden kann, die ein Eindringen von Schmutzpartikeln in diesen Bereich, insbesondere in den Radialspalt zwischen dem Führungszylinder 16 und der Hülse 54, verhindert bzw. eventuell anhaftende Partikel aus dem vorangegangenen Hub sicher entfernt. Durch gezielte Zu- und Abfuhr von Luft über die Versorgungsleitung 98a kann unabhängig von der jeweiligen Bewegungsrichtung der Druckplatte 50 der gewünschte Luftstrom initiiert werden.

Die übrigen, sich aus den Figuren 3 bis 5 ergebenden Maßnahmen sind auf die Be- und Entlüftung des Zwischenraums 84 zwischen dem Zylinderdeckel 58 und der Druckplatte 50 sowie dem Verdrängerraum 86 gerichtet.

Zum Be- und Entlüften des Zwischenraums 84 ist ein Rohr 80 vorgesehen, das abgedichtet den Zylinderraum 82 einschließlich des darin geführten Kolbens 62 vollständig durchsetzt und zwischen dem Verteilerblock 56 und dem Zylinderdeckel 58 angebracht ist. Das Rohr 80 besitzt eine Durchgangsöffnung 81, die in den Zwischenraum 84 einerseits und in eine Übergangsbohrung 79 im Verteilerblock 56 andererseits mündet, so daß über eine Übergangsbohrung 79 und den in der Stützstrebe 92 integrierten Versorgungskanal 92a eine durchgehende Verbindung zu dem Anschlußelement 97 bzw. zu einer Versorgungsleitung 97a hergestellt ist. Die gezielte Be- und Entlüftung des Zwischenraums 84 ist nicht zuletzt deshalb von großer Bedeutung, da hierdurch sichergestellt werden kann, daß keine Partikel in den relativ engen Spalt zwischen der Hülse 54 und der Zylinderwand 60 eindringen. Diese Gefahr tritt speziell beim Hochfahren der Druckplatte 50 auf, da sich hierbei das Volumen des Zwischenraums 84 vergrößert und die Tendenz zum Aufbau eines Unterdrucks besteht, der durch gezielte Zufuhr von Druckluft über die Versorgungsleitung 97a zu begegnen ist.

Zum Druckbeaufschlagen und Entlüften des Verdrängerraums 86 ist ein weiteres Rohr 88 vorgesehen, das sich zwischen dem Verteilerblock 56 und dem Zylinderdeckel 58 erstreckt und den Zylinderraum 82 einschließlich des darin geführten Kolbens 62 vollständig durchsetzt. Das Rohr 88 weist eine radial verlaufende Bohrung 89 auf, die unmittelbar benachbart zum Zylinderdeckel in den Verdrängerraum 86 mündet. Wiederum ist im Verteilerblock 56 eine Übergangsbohrung 90 vorhanden, so daß über die Strebe 94 bzw. des darin integrierten Versorgungskanals 94a Verbindung hergestellt ist zu dem korrespondierenden Anschlußelement 99 mit der Versorgungsleitung 99a.

Die Rohre 80, 88 sind als Spezialschrauben ausgeführt, so daß sie zugleich den Verteilerblock 56 mit dem Zylinderdeckel 58, über die Zylinderwand 60 abgestützt, verbinden.

Aus dem Vorstehenden ergibt sich, daß die vier, primär der Abstützung der pneumatischen Hubeinrichtung 7 dienenden Stützstreben 91, 92, 93, 94 zusätzlich zur gezielten Zu- und Abfuhr von Luft dienen. Es handelt sich einerseits um die zur Betätigung des Verschlußorgans 3 erforderliche Druckluft und andererseits um Luft, die zur gezielten Be- und Entlüftung der diversen Räume, beispielsweise des Innenraums 17 oder des Zwischenraums 84, erforderlich ist. Zu diesem Zweck sind die jeweiligen Versorgungsleitungen 96a, 97a, 98a, 99a einzeln und separat über eine Steuer- und Regeleinheit ansprechbar, um die gewünschten Druckverhältnisse einzustellen und zu halten. Die Regelung muß hierbei in der Lage sein, den sich während des Betätigungsvorgangs permanent und mit großer Dynamik ändernden Bedingungen zu folgen.

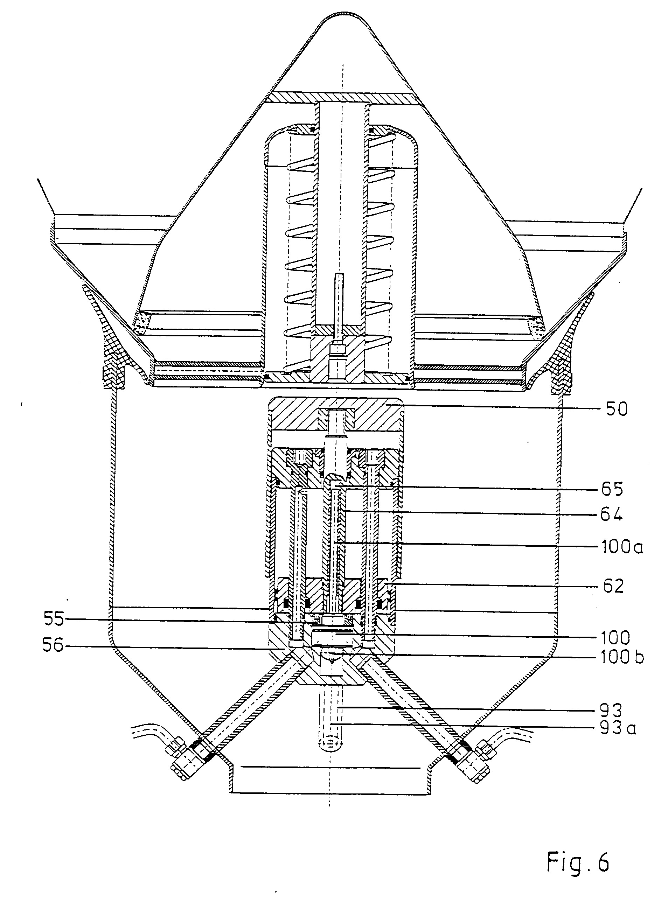

In Figur 6 ist eine weitere Ausführungsvariante dargestellt, bei der in der pneumatischen Hubeinrichtung 7 ein berührungslos arbeitender Wegaufnehmer integriert ist. Es handelt sich hierbei um einen sogenannten Langwegaufnehmer, mit dessen Hilfe die Position des Kolbens 62 erfaßt werden kann. Das erzeugte Signal wird hierbei dem Rechner zugeführt, der dafür sorgt, daß der Kolben 62 - und damit die Druckplatte 50 - einen exakt vorgegebenen Hub vollführt.

Der Wegaufnehmer 100 ist in den Verteilerblock 56 eingesetzt und mit einem Haltering 55 darin fixiert. Der Wegaufnehmer 100 trägt ein Sondenrohr 100a, das in das Innere der Kolbenstange 64 hineinragt. Das Sondenrohr 100a hat keine Berührung mit der Kolbenstange 64, d.h. erfaßt dessen Bewegung bzw. Position berührungslos.

Rückseitig am Wegaufnehmer 100 ist ein Anschlußkabel 100b angebracht. Es ist innerhalb der Stützstrebe 93 verlegt, so daß es vor Beschädigung durch einlaufendes Schüttgut geschützt ist.

Es versteht sich von selbst, daß bei dem Ausführungsbeispiel gemäß Figur 6 ein Be- und Entlüften des Innenraums 17 des Führungszylinders 16 durch die Kolbenstange 64 hindurch nicht möglich ist, da der hierfür benötigte Raum durch den Wegaufnehmer 100 eingenommen ist. Demnach muß entweder auf ein derartiges Be- und Entlüften verzichtet oder aber auf andere Art und Weise realisiert werden.

Die erfindungsgemäße Entleereinrichtung genügt höchsten Ansprüchen und eignet sich insbesondere zum Einsatz in kritischen Bereichen, wie z.B. der Lebensmittel- oder Pharmaindustrie.

### BEZUGSZEICHENLISTE

- 1: Schüttgut-Container
- 2: Auslauftrichter
- 3: Verschlußorgan
- 4: Führung
- 5: Deckel
- 6: Dichtmanschette
- 7: Hubeinrichtung
- 8: Einlaufbereich
- 9: Entleerstation
- 10: Dichtungsring
- 11: Hohlraum
- 12: zylindrische Führung
- 14: Abschluß
- 16: Führungszylinder
- 17: Innenraum
- 18: Ringdichtung
- 20: Scheibe
- 21: Stirnseite
- 22: Druckscheibe
- 23: Tragring
- 24: Druckstange
- 26: Axialabschnitt
- 28: Radialbohrung
- 30: Axialbohrung
- 32: Ringdichtung
- 38: Strebe
- 40: Rückstellfeder
- 41: Aufsatzrohr
- 42: Einlaufbereich
- 50: Druckplatte
- 51: Nut
- 52: Dichtung
- 54: Hülse
- 55: Haltering
- 56: Verteilerblock
- 58: Zylinderdeckel
- 59: Dichtring
- 60: Zylinderwand
- 61: Dichting
- 62: Kolben
- 64: Kolbenstange
- 65: Durchgangsbohrung
- 66: Kolbenstangenrohr
- 67: Durchgangsbohrung
- 68: Gleitbuchse
- 72: Zuführkanal
- 74: Übergangsbohrung
- 76: Zentralbohrung
- 78: Übergangsbohrung
- 79: Übergangsbohrung
- 80: Rohr
- 81: Durchgangsöffnung
- 82: Zylinderraum
- 84: Zwischenraum
- 86: Verdrängerraum, oben
- 87: Verdrängerraum, unten
- 88: Rohr
- 89: Bohrung
- 90: Übergangsbohrung
- 91: Stützstrebe
- 91a: Versorgungskanal
- 92: Stützstrebe
- 92a: Versorgungskanal
- 93: Stützstrebe
- 93a: Versorgungskanal
- 94: Stützstrebe
- 94a: Versorgungskanal
- 96: Anschlußelement
- 96a: Versorgungsleitung
- 97: Anschlußelement
- 97a: Versorgungsleitung
- 98: Anschlußelement
- 98a: Versorgungsleitung
- 99: Anschlußelement
- 99a: Versorgungsleitung
- 100: Wegaufnehmer
- 100a: Sondenrohr
- 100b: Anschlußkabel

## Patentansprüche

1. Entleereinrichtung für Schüttgut-Container (1) mit einem Auslauftrichter (2) und einem Verschlußorgan (3), welches axial verschieblich in einer zylindrischen Führung (5), die über Streben (38) am Auslauftrichter (2) abgestützt ist, gelagert ist, wobei das Verschlußorgan (3) durch Federwirkung gegen die Innenwand des Auslauftrichters (2) in Schließstellung gehalten und zum Anheben in Auslaufstellung von einer Hubeinrichtung (7) beaufschlagbar ist, dadurch gekennzeichnet, daß die Hubeinrichtung (7) aus einem einzelnen, zentral angeordneten Pneumatikzylinder (50 - 90) besteht, der über radial verlaufende Stützstreben (91, 92, 93, 94) im Einlaufbereich (42) der Entleerstation (9) gehalten ist und daß im Inneren der Stützstreben (91, 92, 93, 94) Versorgungskanäle (91a, 92a, 93a, 94a) integriert sind.

2. Entleereinrichtung nach Anspruch 1, dadurch gekennzeichnet, daß die Stützstreben (91, 92, 93, 94) als Rohre ausgebildet sind.

3. Entleereinrichtung nach Anspruch 1 oder 2, dadurch gekennzeichnet, daß an der Außenwandung der Entleerstation (9) Anschlußelemente (96, 97, 98, 99) für Versorgungsleitungen (96a, 97a, 98a, 99a) angebracht sind, welche die Verbindung zu den Versorgungskanälen (91a, 92a, 93a, 94a) der Stützstreben (91, 92, 93, 94) herstellen.

4. Entleereinrichtung nach einem der Ansprüche 1 bis 3, dadurch gekennzeichnet, daß die Stützstreben (91, 92, 93, 94) an einem zentralen Verteilerblock (56) angebracht sind, der Bestandteil des Pneumatikzylinders (50 - 90) ist.

5. Entleereinrichtung nach Anspruch 4, dadurch gekennzeichnet, daß auf den Verteilerblock (56) eine Zylinderwand (60) dicht aufgesetzt ist, die ihrerseits einen Zylinderdeckel (58) trägt, so daß innerhalb ein Zylinderraum (82) gebildet ist, in welchem ein Kolben (62) axial verschieblich gelagert ist, wobei zum Druckbeaufschlagen und Entlüften ein im Verteilerblock (56) integrierter Zuführkanal (72) vorgesehen ist, der über eine Übergangsbohrung (74) und die darin mündende Strebe (91) Verbindung zum Anschlußelement (96) besitzt, so daß eine durchgehende Verbindung zwischen dem Anschlußelement (96) und demjenigen Teil des Zylinderraums (82), der zwischen dem Kolben (62) und dem Verteilerblock (56) liegt (unterer Verdrängerraum 87), entsteht.

6. Entleereinrichtung nach Anspruch 5, dadurch gekennzeichnet, daß der Kolben (62) mit einer Kolbenstange (64) versehen ist, die den Zylinderraum (82) axial durchsetzt und den Zylinderdeckel (58) abgedichtet durchdringt sowie stirnseitig eine auf die Druckscheibe (22) des Verschlußorgans (3) gerichtete Druckplatte (50) trägt.

7. Entleereinrichtung nach Anspruch 6, dadurch gekennzeichnet, daß die Druckplatte (50) eine nach unten weisende Hülse (54) trägt, die mit geringem radialem Spiel an der Zylinderwand (60) geführt ist.

8. Entleereinrichtung nach Anspruch 6 oder 7, dadurch gekennzeichnet, daß zum Be- und Entlüften des Innenraums (17) des Führungszylinders (16) der Verteilerblock (56) ein zentrales Kolbenstangenrohr (66) trägt, auf dem axial verschieblich und abgedichtet die Kolbenstange (64) geführt ist, und daß die Kolbenstange (64) ihrerseits eine Durchgangsbohrung (65) aufweist, die einerseits Verbindung hat zu einer Durchgangsbohrung (67) des Kolbenstangenrohrs (66) und andererseits an der Stirnseite der Druckplatte (50) im Bereich einer Ringdichtung (52) mündet, so daß eine gegenüber der Umgebung abgedichtete, durchgehende Verbindung vom Innenraum (17) des Führungszylinders (16) zu dem korrespondierenden Anschlußelement (98) der Entleerstation (9) entsteht, sofern die Druckplatte (50) zur Anlage an die Druckscheibe (22) gebracht ist.

9. Entleereinrichtung nach Anspruch 6 oder 7, dadurch gekennzeichnet, daß zum Be- und Entlüften des Innenraums (17) des Führungszylinders (16) der Verteilerblock (56) ein zentrales Kolbenstangenrohr (66) trägt, auf dem axial verschieblich und abgedichtet die Kolbenstange (64) geführt ist, und daß die Kolbenstange (64) ihrerseits eine Durchgangsbohrung (65) aufweist, die einerseits Verbindung hat zu einer Durchgangsbohrung (67) des Kolbenstangenrohrs (66) und andererseits an der Stirnseite der Druckplatte (50) im Bereich einer durchgehenden, radial verlaufenden Nut (51) mündet, so daß eine durchgehende Verbindung vom Innenraum (17) des Führungszylinders (16) zu dem korrespondierenden Anschlußelement (98) der Entleerstation (9) und ein zusätzlicher, durch die Nut (51) gebildeter Entlüftungskanal entsteht, sofern die Druckplatte (50) zur Anlage an die Druckscheibe (22) gebracht ist.

10. Entleereinrichtung nach einem der Ansprüche 6 bis 9, dadurch gekennzeichnet, daß zum Be- und Entlüften des Zwischenraums (84) zwischen dem Zylinderdeckel (58) und der Druckplatte (50) ein Rohr (80) vorgesehen ist, das abgedichtet und den Zylinderraum (82) einschließlich des darin geführten Kolbens (62) vollständig durchsetzend zwischen dem Verteilerblock (56) und dem Zylinderdeckel (58) angeordnet ist und das in den Zwischenraum (84) einerseits und in eine Übergangsbohrung (79) im Verteilerblock (56) andererseits mündet, so daß eine durchgehende Verbindung zwischen dem Zwischenraum (84) und dem korrespondierenden Anschlußelement (97) entsteht.

11. Entleereinrichtung nach einem der Ansprüche 6 bis 10, dadurch gekennzeichnet, daß zum Druckbeaufschlagen und Entlüften desjenigen Teils des Zylinderraums (82), der zwischen dem Kolben (62) und dem Zylinderdeckel (58) liegt (oberer Verdrängerraum (86)), ein Rohr (88) vorgesehen ist, das abgedichtet und den Zylinderraum (82) einschließlich des darin geführten Kolbens (62) vollständig durchsetzend zwischen dem Verteilerblock (56) und dem Zylinderdeckel (58) angeordnet ist und das über eine dem Zylinderdeckel (58) unmittelbar benachbarte Bohrung (89) in den Verdrängerraum (86) einerseits und in eine Übergangsbohrung (90) im Verteilerblock (56) andererseits mündet, so daß eine durchgehende Verbindung zwischen dem oberen Verdrängerraum (86) und dem korrespondierenden Anschlußelement (99) entsteht.

12. Entleereinrichtung nach Anspruch 10 oder 11, dadurch gekennzeichnet, daß die Rohre (80, 88) als Spezialschrauben ausgeführt sind, die der Verschraubung des Zylinderdeckels (58) mit dem Verteilerblock (56) dienen.

13. Entleereinrichtung nach einem der vorstehenden Ansprüche, dadurch gekennzeichnet, daß zum Bestimmen der Position des Kolbens (62) ein Wegaufnehmer (100) vorgesehen ist.

14. Entleereinrichtung nach Anspruch 13, dadurch gekennzeichnet, daß der Wegaufnehmer (100) koaxial am Verteilerblock (56) angebracht ist und mit einem Sondenrohr (100a) in die Bohrung (65) der Kolbenstange (64) hineinragt.

15. Entleereinrichtung nach Anspruch 13 oder 14, dadurch gekennzeichnet, daß ein Anschlußkabel (100b) innerhalb der Stützstrebe (93) verlegtist.

## Claims

1. Emptying device for a bulk-material container (1), having a discharge funnel (2) and a closure member (3) which is mounted in an axially displaceable manner in a cylindrical guide (5) supported on the discharge funnel (2) by means of struts (38), the closure member (3) being held in the closed position against the inside wall of the discharge funnel (2) by spring action and being capable of being acted on by a lifting device (7) for the purpose of raising it into the discharge position, characterized in that the lifting device (7) comprises a single, centrally disposed pneumatic cylinder (50-90) which is held in the inlet region (42) of the emptying station (9) by means of radially extending supporting struts (91, 92, 93, 94) and in that supply ducts (91a, 92a, 93a, 94a) are integrated in the interior of the supporting struts (91, 92, 93, 94).

2. Emptying device according to Claim 1, characterized in that the supporting struts (91, 92, 93, 94) are formed as tubes.

3. Emptying device according to Claim 1 or 2, characterized in that connecting elements (96, 97, 98, 99) for supply lines (96a, 97a, 98a, 99a) which make the connection to the supply ducts (91a, 92a, 93a, 94a) of the supporting struts (91, 92, 93, 94) are mounted on the outside wall of the emptying station (9).

4. Emptying device according to one of Claims 1 to 3, characterized in that the supporting struts (91, 92, 93, 94) are mounted on a central distributor block (56) which is a component of the pneumatic cylinder (50-90).

5. Emptying device according to Claim 4, characterized in that there is tightly mounted on the distributor block (56) a cylinder wall (60) which carries in turn a cylinder cap (58) so that there is formed inside a cylinder chamber (82) in which a piston (62) is mounted in an axially displaceable manner, there being provided for the purpose of applying and releasing pressure a supply duct (72) which is integrated in the distributor block (56) and which communicates with the connecting element (96) by means of a transfer bore (74) and the strut (91) debouching thereinto so that a continuous connection is made between the connecting element (96) and that part of the cylinder chamber (82) which is situated between the piston (62) and the distributor block (56) (lower displacement chamber 87).

6. Emptying device according to Claim 5, characterized in that the piston (62) is provided with a piston rod (64) which passes axially through the cylinder chamber (82) and pierces the cylinder cap (58) in a sealed manner and also carries on its end face a pressure plate (50) directed at the pressure disc (22) of the closure member (3).

7. Emptying device according to Claim 6, characterized in that the pressure plate (50) carries a sleeve (54) which points downwards and which is guided with little radial play on the cylinder wall (60).

8. Emptying device according to Claim 6 or 7, characterized in that, for the purpose of ventilating and releasing pressure in the interior (17) of the guide cylinder (16), the distributor block (56) carries a central piston-rod tube (66) on which the piston rod (64) is guided in an axially displaceable and sealed manner, and in that the piston rod (64) has in turn a through bore (65) which, on the one hand, communicates with a through bore (67) of the piston rod tube (66) and, on the other hand, debouches at the end face of the pressure plate (50) in the region of a ring seal (52), so that a continuous connection which is sealed from the environment is made from the interior (17) of the guide cylinder (16) to the corresponding connecting element (98) of the emptying station (9) if the pressure plate (50) is brought up against the pressure disc (22).

9. Emptying device according to Claim 6 or 7, characterized in that, for the purpose of ventilating and releasing pressure in the interior (17) of the guide cylinder (16), the distributor block (56) carries a central piston-rod tube (66) on which the piston rod (64) is guided in an axially displaceable and sealed manner and in that the piston rod (64) has in turn a through bore (65) which, on the one hand, communicates with a through bore (67) of the piston-rod tube (66) and, on the other hand, debouches at the end face of the pressure plate (50) in the region of a continuous, radially extending groove (51) so that a continuous connection is made from the interior (17) of the guide cylinder (16) to the corresponding connecting element (98) of the emptying station (9) and an additional pressure-release duct formed by the groove (51) is produced if the pressure plate (50) is brought up against the pressure disc (22).

10. Emptying device according to one of Claims 6 to 9, characterized in that, for the purpose of ventilating and releasing pressure in the gap (84) between the cylinder cap (58) and the pressure plate (50), a tube (80) is provided which is disposed in a sealed manner and so as to pass completely through the cylinder chamber (82) including the piston (62) guided therein between the distributor block (56) and the cylinder cap (58) and which debouches into the gap (84) on the one hand, and into a transfer bore (79) in the distributor block (56) on the other hand, so that a continuous connection is made between the gap (84) and the corresponding connecting element (97).

11. Emptying device according to one of Claims 6 to 10, characterized in that, for the purpose of applying and releasing pressure in that part of the cylinder chamber (82) which is situated between the piston (62) and the cylinder cap (58) (upper displacement chamber (86)), a tube (88) is provided which is disposed in a sealed manner and so as to pass completely through the cylinder chamber (82) including the piston (62) guided therein between the distributor block (56) and the cylinder cap (58) and which debouches via a bore (89) directly adjacent to the cylinder cap (58) into the displacement chamber (86) on the one hand, and into a transfer bore (90) in the distributor block (56) on the other hand, so that a continuous connection is made between the upper displacement chamber (86) and the corresponding connecting element (99).

12. Emptying device according to Claim 10 or 11, characterized in that the tubes (80, 88) are designed as special screws which serve to screw the cylinder cap (58) to the distributor block (56).

13. Emptying device according to one of the preceding claims, characterized in that a distance sensor (100) is provided to determine the position of the piston (62).

14. Emptying device according to Claim 13, characterized in that the distance sensor (100) is mounted coaxially on the distributor block (56) and projects by means of a probe tube (100a) into the bore (65) of the piston rod (64).

15. Emptying device according to Claim 13 or 14, characterized in that a connecting cable (100b) is laid inside the supporting strut (93).

## Revendications

1. Dispositif de vidange de conteneurs (1) pour matériaux en vrac, comprenant une trémie de vidange (2) et un organe de fermeture (3) pouvant coulisser axialement dans un guidage cylindrique (5) s'appuyant sur la trémie (2) par des barres (38), l'organe (3) étant maintenu en position de fermeture par action de ressorts l'appliquant sur la paroi interne de la trémie de vidange (2) tandis qu'un dispositif de levage (7) peut être actionné pour soulever l'organe (3) et l'amener en position de vidange,
caractérisé en ce que
le dispositif de levage (7) est composé d'un unique vérin pneumatique (50, 90) central, maintenu par des barres de soutien radiales (91, 92, 93, 94) dans la zone d'introduction (42) de la station de vidange (9), des canaux d'alimentation (91a, 92a, 93a, 94a) étant intégrés aux barres de soutien (91, 92, 93, 94).

2. Dispositif de vidange selon la revendication 1,
caractérisé en ce que
les barres de soutien (91, 92, 93, 94) sont des tubes.

3. Dispositif de vidange selon la revendication 1 ou 2,
caractérisé en ce que
la paroi externe de la station de vidange (9) porte des éléments de raccordement (96, 97, 98, 99) destinés à des conduites d'alimentation (96a, 97a, 98a, 99a) de manière à relier celles-ci aux canaux d'alimentation (91a, 92a, 93a, 94a) contenus dans les barres de soutien (91, 92, 93, 94).

4. Dispositif de vidange selon une des revendications 1 à 3,
caractérisé en ce que
les barres de soutien (91, 92, 93, 94) sont montées sur un bloc répartiteur central (56) faisant partie du vérin pneumatique (50, 90).

5. Dispositif de vidange selon la revendication 4,
caractérisé en ce que
sur le bloc répartiteur (56) est montée, de manière étanche, une paroi cylindrique (60) qui porte elle-même un couvercle de cylindre (58) de manière à créer à l'intérieur une chambre de cylindre (82) dans laquelle peut coulisser axialement un piston (62) tandis que pour assurer l'aération ou le dégazage, il est prévu un canal d'amenée (72) intégré au bloc répartiteur (56) et relié par un alésage de transition (74) et la barre (91) qui y débouche, à l'élément de raccordement (96), de sorte qu'il s'établit une liaison continue entre l'élément de raccordement (96) et la partie de la chambre de cylindre (82) qui se trouve entre le piston (62) et le bloc répartiteur (56) (chambre inférieure de refoulement).

6. Dispositif de vidange selon la revendication 5,
caractérisé en ce que
le piston (62) est équipé d'une tige (64) disposée axialement dans la chambre de cylindre (82) et traversant, de manière étanche, le couvercle de cylindre (58), cette tige (64) portant frontalement une plaque de poussée (50) orientée vers le disque de poussée (22) de l'organe de fermeture (3).

7. Dispositif de vidange selon la revendication 6,
caractérisé en ce que
la plaque de poussée (50) porte une douille (54) dirigée vers le bas, mobile avec un faible jeu radial le long de la paroi de cylindre (60).

8. Dispositif de vidange selon la revendication 6 ou 7,
caractérisé en ce que
pour aérer ou dégazer le volume intérieur (17) du cylindre de guidage (16), le bloc répartiteur (56) porte un tube central de tige de piston (66) sur lequel peut coulisser avec étanchéité la tige de piston (64) présentant elle-même un alésage de passage (65) qui, d'une part est en liaison avec un alésage de passage (67) du tube (66) de tige de piston et, d'autre part débouche sur la face frontale de la plaque de poussée (50) dans la zone d'un joint d'étanchéité annulaire (52) de sorte que se trouve établie une liaison continue, étanche par rapport à l'environnement, allant du volume intérieur (17) du cylindre de guidage (16) à l'élément de raccordement correspondant (98) de la station de vidange (9), lorsque la plaque de poussée (50) est amenée en appui sur le disque de poussée (22).

9. Dispositif de vidange selon la revendication 6 ou 7,
caractérisé en ce que
pour aérer ou dégazer le volume intérieur (17) du cylindre de guidage (16), le bloc répartiteur (56) porte un tube central de tige de piston (66) sur lequel peut coulisser avec étanchéité la tige de piston (64) présentant elle-même un alésage de passage (65) qui, d'une part est en liaison avec un alésage de passage (67) du tube de tige de piston (66) et, d'autre part débouche sur la face frontale de la plaque de poussée (50) dans la zone d'une rainure radiale continue (51), de sorte que sont créés une liaison continue allant du volume intérieur (17) du cylindre de guidage (16) à l'élément (98) correspondant au raccordement de la station de vidange (9) ainsi qu'un canal de dégazage complémentaire constitué par la rainure (51) quand la plaque de poussée (50) est amenée en appui sur le disque de poussée (22).

10. Dispositif de vidange selon l'une des revendications 6 à 9,
caractérisé en ce que
pour aérer et dégazer l'espace intermédiaire (84) séparant le couvercle de cylindre (58) et la plaque de poussée (50), il est prévu un tube (80) monté avec étanchéité et de manière à traverser complètement la chambre de cylindre (82) ainsi que le piston (62) qui s'y trouve, située entre le bloc répartiteur (56) et le couvercle de cylindre (58), ce tube (80) débouchant, d'une part dans l'espace intermédiaire (84) et, d'autre part dans un alésage de transition (79) situé dans le bloc répartiteur (56) de sorte que se trouve établie une liaison continue entre l'espace intermédiaire (84) et l'élément de raccordement (97) correspondant.

11. Dispositif de vidange selon une des revendications 6 à 10,
caractérisé en ce que
pour mettre sous pression et pour dégazer la partie de la chambre de cylindre (82) située entre le piston (62) et le couvercle de cylindre (58) (chambre supérieure de compression (86)), il est prévu un tube (88), monté avec étanchéité et traversant totalement la chambre de cylindre (82) ainsi que le piston (62) qui s'y trouve, située entre le bloc répartiteur (56) et le couvercle de cylindre (58), ce tube débouchant par l'intermédiaire d'un trou (89) percé à proximité immédiate du couvercle de cylindre (58), d'une part dans la chambre de compression (86) et, d'autre part dans un alésage de transition (90) situé dans le bloc répartiteur (56), de sorte que se trouve établie une liaison continue entre la chambre supérieure de compression (86) et l'élément de raccordement (99) correspondant.

12. Dispositif de vidange selon la revendication 10 ou 11,
caractérisé en ce que
les tubes (80, 88) ont la forme de vis spéciales servant à relier par vissage le couvercle de cylindre (58) et le bloc répartiteur (56).

13. Dispositif de vidange selon l'une des revendications précédentes,
caractérisé en ce qu'
il est prévu un détecteur de déplacement (100) pour définir la position du piston (62).

14. Dispositif de vidange selon la revendication 13,
caractérisé en ce que
le détecteur de déplacement (100) est monté coaxialement sur le bloc répartiteur (56) et pénètre par l'intermédiaire d'une sonde tubulaire (100a) dans l'alésage (65) de la tige de piston (64).

15. Dispositif de vidange selon les revendications 13 ou 14,
caractérisé en ce qu'
un câble de raccordement (100b) est installé à l'intérieur de la barre de soutien (93).
